# EUROPÄISCHE PATENTSCHRIFT

(11) **EP 3 989 596 B1**
(45) Veröffentlichungstag und Bekanntmachung des Hinweises auf die Patenterteilung: **07.05.2025**
(21) Anmeldenummer: 21189938.0
(22) Anmeldetag: 05.08.2021
(51) Int. Cl.: H04Q 9/00

(54) **MESSSYSTEM UND MESSINFRASTRUKTUR MIT EINEM MESSSYSTEM UND EINER ZENTRALEINHEIT**
MEASURING SYSTEM AND MEASURING INFRASTRUCTURE COMPRISING A MEASURING SYSTEM AND A CENTRAL UNIT
SYSTÈME DE MESURE ET INFRASTRUCTURE DE MESURE DOTÉE D'UN SYSTÈME DE MESURE ET D'UNE UNITÉ CENTRALE

(30) Priorität: 26.10.2020 DE 102020128102
(43) Veröffentlichungstag der Anmeldung: 27.04.2022
(73) Patentinhaber: E.ON SE, 45131 Essen (DE); E.ON Grid Solutions GmbH, 20099 Hamburg (DE)
(72) Erfinder: Kaden, Sebastian, 22453 Hamburg (DE); Uffmann, Dirk, 45721 Haltern am See (DE)
(74) Vertreter: Gunzelmann, Rainer

(56) Entgegenhaltungen:
- US-A1- 2012 022 813
- US-A1- 2019 033 354

## Beschreibung

### TECHNISCHES GEBIET

Die vorliegende Offenbarung betrifft das technische Gebiet der Messsysteme zur geeichten Messung von elektrischer Arbeit, wobei das Messsystem Zusatzfunktionen bereitstellt. Ferner betrifft die vorliegende Offenbarung ein Messsystem, welches mit einer Zentraleinheit in Kommunikationsverbindung steht.

### HINTERGRUND

Viele Energienetzbetreiber statten nicht nur Neubauten, sondern auch Bestandsbauten mit "modernen Messeinrichtungen", sogenannten "Smart Metern" aus. Bei den modernen Messeinrichtungen handelt es sich um geeichte digitale Stromzähler, der üblicherweise nur den aktuellen Zählerstand, und manchmal auch die aktuelle Gesamtleistung aller eingeschalteten Elektrogeräte und Verbrauchswerte für verschiedene Zeiträume anzeigen. In Deutschland ist der Einbau moderner Messeinrichtungen, insbesondere der Pflichteinbau, im Messstellenbetriebsgebietsgesetz, MsbG, geregelt.

Die modernen Messeinrichtungen umfassen von Haus aus keine Kommunikationseinheit, können aber mit einem als Kommunikationseinheit ausgebildeten "Smart-Meter-Gateway" zu einem "intelligenten Messsystem" aufgerüstet werden. Die meisten Energienetzbetreiber setzen jedoch aus Kostengründen, insbesondere bei Kunden mit einem Jahresverbrauch von unter 6000 kWh, kein Smart-Meter-Gateway ein, so dass der Einsatz moderner Messeinrichtungen nur einen geringen Mehrwert liefert.

Die Präsentation "Energy Disaggregation", Carrie Armel, Precour Energy Efficiency Center, Stanford, Dezember 2011, analysiert, wie ein Smart Meter umgerüstet werden kann, um neben dem Zählen des Energieverbrauchs Mehrwertdienste bereitstellen zu können. Da es sich bei Smart Metern jedoch um geeichte Messinstrumente handelt, die von einer Behörde abgenommen werden müssen und verplombt sind, können die in dieser Präsentation vorgeschlagenen Umrüstungen nur mit erheblichem Aufwand an einem Smart Meter realisiert werden.

Die US 2012/022813 A1 betrifft ein Endverbraucher-Elektrizitätsnetz, das über einen Hauptschalter mit einem Elektrizitätsübertragungskabel verbunden ist. Das Endverbraucher-Elektrizitätsnetz umfasst einen primären Teil mit einem geeichten elektrischen Zähler, der die im Netz verbrauchte Elektrizitätsmenge misst, und einen sekundären Teil, der mit dem primären Teil verbunden ist und Netzteile umfasst, die im Netz elektrisch parallel zueinander geschaltet sind. Der Primärteil ist ferner mit einem ersten Stromsensor versehen, der so angeordnet ist, dass er einen durch den Primärteil fließenden Gesamtstrom misst.

Die US 2019/0033354 A1 betrifft ein System und Verfahren zur Synchronisation eines zentralen Controllers, der drahtlos mit mindestens einem selbstversorgenden Leistungssensor (SPPS) verbunden ist. Das Verfahren umfasst: das Abtasten eines elektrischen Signals durch mindestens einen SPPS, Schätzen der Zeit eines Abtastwerts des elektrischen Signals durch mindestens einen SPPS, Erzeugen eines Pakets, das Paketkomponenten einschließlich eines Präambels, eines Synchronisationsfelds und Nachrichtendaten umfasst, Erzeugen von Synchronisationsinformationen für das Synchronisationsfeld des Pakets, drahtloses Übertragen der Paketkomponenten, Bestimmen eines Zeitoffset-Werts für das Paket, wobei der Zeitoffset aus der Zeit des Abtastwerts des elektrischen Signals und einem Übertragungszeitstempel der Synchronisationsinformationen berechnet wird und Übertragen des Zeitoffset-Werts durch Anhängen an das Paket, wobei der Zeitoffset-Wert zum Berechnen von mindestens einem elektrischen Parameter verwendet wird.

### KURZER ABRISS

Der vorliegenden Offenbarung liegt die Aufgabe zugrunde, ein Messsystem bereitzustellen, welches neben einer eichrechtskonformen Messung eines Energieverbrauchs Zusatzdienste ermöglicht.

Zur Lösung dieser Aufgabe wird ein Messsystem gemäß Anspruch 1 vorgeschlagen, das einen geeichten digitalen Stromzähler, eine Spannungs- und Strommessvorrichtung, die dazu eingerichtet ist, digitale Spannungs- und Strommesswerte mit einer Abtastfrequenz im Kilohertzbereich (kHz-Bereich) zu erzeugen, eine Verarbeitungsvorrichtung, die dazu eingerichtet ist, die digitalen Spannungs- und Strommesswerte zu verarbeiten, um verarbeitete digitale Daten zu bestimmen, und eine Kommunikationsvorrichtung, die dazu eingerichtet ist, die verarbeiteten digitalen Daten an eine Zentraleinheit zu senden, umfasst.

Bei dem geeichten digitalen Stromzähler kann es sich um eine sogenannte "moderne Messeinrichtung, mME" handeln, d.h. einen geeichten elektronischen Stromzähler, der vor einem unbemerkten bzw. unberechtigten Zugriff von außen geschützt ist (beispielsweise durch eine Verplombung des Gehäuses des Stromzählers). Der geeichte digitale Stromzähler kann mit einer Abtrastfrequenz unterhalb des kHz-Bereiches, beispielsweise mit einer Abtrastfrequenz von 1 bis 3 Hz arbeiten. Optional kann der digitale Stromzähler eine digitale Anzeige aufweisen, über die ein Nutzer den aktuellen Zählerstand, und nach Eingabe einer PIN, die aktuelle Gesamtleistung aller eingeschalteten Elektrogeräte und detaillierte Verbrauchswerte für verschiedene Zeiträume (z.B. Tag, Woche, Monat und Jahr) einsehen kann.

Bei der Spannungs- und Strommessvorrichtung handelt es sich hinsichtlich des geeichten digitalen Stromzählers um eine separate Vorrichtung, die dazu eingerichtet ist, unabhängig von dem geeichten digitalen Stromzähler die Spannungen und Ströme zu messen. Insbesondere misst die Spannungs- und Strommessvorrichtung die gleichen Spannungen und Ströme wie der geeichte digitale Stromzähler, im Gegensatz zu dem geeichten digitalen Stromzähler jedoch hochfrequent. Dazu kann die Spannungs- und Strommessvorrichtung an die gleichen elektrischen Leitungen wie der geeichte digitale Stromzähler angeschlossen sein. Die Spannungs- und Strommessvorrichtung kann einen Stromsensor, einen Spannungssensor und einen Analog-Digital-Wandler zum AD-Wandeln der Messwerte des Stromsensors und des Spannungssensors umfassen. Insbesondere ist die Spannungs- und Strommessvorrichtung dazu eingerichtet, mindestens 4000 Spannungs- und Strommesswerte pro Sekunde, vorzugsweise 10000 bis 15000 Spannungs- und Strommesswerte pro Sekunde, weiter vorzugsweise 10000 Spannungs- und Strommesswerte pro Sekunde, zu erzeugen. Die Spannungs- und Strommessvorrichtung kann ferner dazu eingerichtet sein, die Spannungs- und Strommesswerte in einem Drehstromsystem in jeder von drei Phasen zu bestimmen.

Bei der Verarbeitungsvorrichtung kann es sich um einen Prozessorvorrichtung mit einem darauf laufenden Betriebssystem handeln, die dazu eingerichtet ist, auf die digitalen Spannungs- und Strommesswerte Detektions- und/oder Filteralgorithmen anzuwenden. Insbesondere ist die Verarbeitungsvorrichtung dazu eingerichtet, die digitalen Spannungs- und Strommesswerte in Zeitabschnitten, beispielsweise im Millisekunden-Bereich, zu verarbeiten. Beispielsweise kann die Verarbeitungsvorrichtung dazu eingerichtet sein, Harmonische Schwingungen mittlerer Ordnung zu verarbeiten.

Bei der Kommunikationsvorrichtung kann es sich um jede Art von Kommunikationsschnittstelle handeln, die dazu eingerichtet ist, die digitalen Spannungs- und Strommesswerte drahtlos (z.B. über WLAN oder Bluetooth) und/oder drahtgebunden (z.B. über Ethernet) an die Zentraleinheit zu senden. Beispielsweise kann das Messsystem ein "Azure Sphere Modul" der Firma Microsoft umfassen, welches die Aufgaben der Verarbeitungsvorrichtung und der Kommunikationsvorrichtung übernimmt. Bei der Kommunikationsvorrichtung kann es sich auch um ein "Smart-Meter-Gateway, SMGW" handeln, das zusammen mit dem mME ein "intelligentes Messsystem" bildet. Das SMGW umfasst in diesem Fall eine "Lokale Metrologische Netz, LMN"-Schnittstelle zur Verbindung von Messeinrichtungen eines Letztverbrauchers mit dem SMGW, eine "Weitverkehrsnetz, WAN"-Schnittstelle zum Verbinden des SMGW mit externen Marktteilnehmern und eine "Heimnetz, HAN"-Schnittstelle zum Anschluss von steuerbaren Geräten.

Bei der Zentraleinheit kann es sich um ein sogenanntes "Backend" handeln, welches dazu eingerichtet ist, mit der Kommunikationsvorrichtung zu kommunizieren, um Gateway-Administrator-, Datenverwaltungs-, Datenverarbeitungs- und/oder Netzwerkverwaltungs-Funktionen auszuführen. Insbesondere handelt es sich bei der Zentraleinheit um einen Cloud-Rechner, der über das Internet und/oder eine Mobilfunknetz mit der Kommunikationsvorrichtung in Kommunikationsverbindung steht.

Vorzugsweise ist der digitale Stromzähler innerhalb eines eichrelevanten Teils des Messsystems und die Spannungs- und Strommessvorrichtung außerhalb des eichrelevanten Teils des Messsystems angeordnet. Insbesondere kann es sich bei dem eichrelevanten Teil des Messsystems um einen verplombten Teil (beispielsweise ein verplombtes Gehäuse) des Messsystems handeln.

Bei der Verarbeitungsvorrichtung kann es sich um eine frei programmierbare, digitale Verarbeitungsvorrichtung handeln. Ferner kann die Kommunikationsvorrichtung dazu eingerichtet sein, die Verarbeitungsvorrichtung zu programmieren. Die Verarbeitungsvorrichtung und/oder die Kommunikationsvorrichtung können ebenfalls außerhalb des eichrelevanten Teils des Messsystems angeordnet sein.

Die Zentraleinheit weist üblicherweise eine um ein Vielfaches höhere Rechenleistung als die Verarbeitungsvorrichtung des Messsystems auf, so dass es sich grundsätzlich anbietet, die digitalen Spannungs- und Strommesswerte in der Zentraleinheit zu verarbeiten. Bei der Erzeugung der digitalen Spannungs- und Strommesswerte mit einer Abtastfrequenz im Kilohertzbereich werden jedoch große Mengen an Messdaten generiert. So ist es je nach Abtastfrequenz möglich, dass pro Stunde 14 GB Messdaten generiert werden. Es ist aber nur mit einem relativ hohen Hardware-Aufwand bzw. einer relativ hohen Prozessorleistung möglich, diese Datenmengen von der Spannungs- und Strommessvorrichtung zur Zentraleinheit zu senden. Auch der Bedarf an benötigter Speicherkapazität ist relativ groß. Um diese Probleme zu vermeiden, kann die Verarbeitungsvorrichtung dazu eingerichtet sein, die digitalen Spannungs- und Strommesswerte derart zu verarbeiten, dass ein Datenvolumen der verarbeiteten digitalen Daten geringer als ein Datenvolumen der erzeugten Spannungs- und Strommesswerte ist. Insbesondere kann die Verarbeitungsvorrichtung dazu eingerichtet sein, die digitalen Spannungs- und Strommesswerte vorzuverarbeiten, z.B. hochaufgelöst eine Voranalyse auszuführen, und nur relevante Daten an die Zentraleinheit zu senden. Beispielsweise ist es möglich, den Gesamtverbrauch rechnerisch in einzelne elektrische Verbraucher zu zerlegen, d.h. eine Aufschlüsselung einer Vielzahl elektrischer Verbraucher im Gesamtenergieverbrauch vorzunehmen, und nur relevante Daten an die Zentraleinheit zusenden. Die nach elektrischen Verbrauchern aufgeschlüsselten Daten können dann zusammen mit der jeweiligen Stromaufnahme in Echtzeit ausgegeben bzw. visualisiert werden. Des Weiteren ist es möglich, unterschiedliche Zustände eines elektrischen Verbrauchers zu ermitteln, und somit die Erfassung verschiedener Stufen im Alterungsprozess eines elektrischen Verbrauchers nachzuvollziehen. Zusätzlich oder alternativ ist es denkbar, eine Datenerfassung zum Zustand des elektrischen Energienetzes vorzunehmen.

Das Messsystem umfasst ferner eine erste Speicherungsvorrichtung, die dazu eingerichtet ist, die digitalen Spannungs- und Strommesswerte zu speichern. Beispielsweise kann es sich bei der Speicherungsvorrichtung um ein Random Access Memory, RAM, und/oder einen Flash-Speicher handeln. Es kann sich bei der Speicherungsvorrichtung aber beispielsweise auch um eine Speichereinheit in einem Azure Sphere Modul handeln.

Zur Vorverarbeitung der Spannungs- und Strommesswerte in dem Messsystem und zur Vermeidung von großen Mengen an gespeicherten Daten ist die Verarbeitungsvorrichtung dazu eingerichtet, einen Anstieg über einen Schwellenwert und/oder einen Abfall unter einen Schwellenwert der digitalen Spannungs- und/oder Strommesswerte zu bestimmen, und die erste Speicherungsvorrichtung ist dazu eingerichtet, in Reaktion auf die Bestimmung eines Anstiegs über einen Schwellenwert und/oder eines Abfalls unter einen Schwellenwert der digitalen Spannungs- und/oder Strommesswerte durch die Verarbeitungsvorrichtung, für ein Zeitintervall, welches dem Anstieg und/oder dem Abfall entspricht, die digitalen Spannungs- und Strommesswerte zu speichern. Bei den Schwellenwerten kann es sich insbesondere um Spannungs- und/oder Strommesswerte handeln, die sich von einem Netzrauschen unterscheiden. Bei den Schwellenwerten kann es sich auch um Werte handeln, die mit Spannungen- und/oder Strömen im Zusammenhang stehen.

Zur Bestimmung einzelner Verbraucher kann die Verarbeitungsvorrichtung dazu eingerichtet sein, basierend auf den für das Zeitintervall gespeicherten digitalen Spannungs- und Strommesswerten eine charakteristische Signatur zu erzeugen. Bei der charakteristischen Signatur kann es sich um einen sogenannten "Fingerprint" handeln, der einen elektrischen Verbraucher, beispielsweise eine Waschmaschine oder eine Spülmaschine, charakterisiert bzw. eindeutig identifiziert. Der Fingerprint kann einen charakteristischen Verlauf in einer Zeitdomäne und/oder in einer Frequenzdomäne umfassen. Insbesondere kann die Erzeugung der charakteristischen Signatur eine Transformation des zeitlichen Verlaufs der Spannungs- und Strommesswerte von der Zeitdomäne in die Frequenzdomäne, beispielsweise mit einer Fourier-Transformation (FT), insbesondere einer schnellen Fourier-Transformation (FFT), umfassen. Ferner kann die charakteristische Signatur in der Frequenzdomäne ein Frequenzspektrum sein, welches eine Vielzahl charakteristischer Spitzen (sogenannte "Peaks") umfasst.

Die Verarbeitungsvorrichtung kann ferner dazu eingerichtet sein, von elektrischen Verbrauchern ausgesendetes Rauschen im Stromnetz (d.h. Störspannungen) zu erfassen, welches jeweils auf unterschiedlichen Frequenzen liegt, so dass Rückschlüsse auf den elektrischen Verbraucher möglich sind.

Zur intelligenten Aussortierung, welche Daten an die Zentraleinheit gesendet werden, kann die Verarbeitungsvorrichtung dazu eingerichtet sein, die charakteristische Signatur mit einer vorgegebenen Signatur zu vergleichen und in Abhängigkeit von dem Vergleich die Kommunikationsvorrichtung zu instruieren, die für das Zeitintervall gespeicherten digitalen Spannungs- und Strommesswerte und/oder die charakteristische Signatur an die Zentraleinheit zu senden. Bei der vorgegebenen Signatur kann es sich um eine Referenz-Signatur handeln, wobei der Vergleich eine Differenzbildung zwischen charakteristischer Signatur und vorgegebener Signatur umfassen kann. Insbesondere kann der Vergleich eine Skalierung der charakteristischen Signatur und der vorgegebenen Signatur umfassen, sodass bei der Differenzbildung nur die charakteristischen Formen der Signaturen, jedoch keine Absolutwerte verglichen werden.

Gemäß einer Ausführungsform kann die Verarbeitungsvorrichtung dazu eingerichtet sein, wenn der Vergleich durch die Verarbeitungsvorrichtung eine Übereinstimmung zwischen der charakteristischen Signatur und der vorgegebenen Signatur ergibt, die charakteristische Signatur und/oder die charakteristische Signatur betreffende digitale Spannungs- und Strommesswerte an die Zentraleinheit zu senden. Dies kann der Fall sein, wenn der Vergleich eine Erkennung eines elektrischen Verbrauchers, beispielsweise eine Erkennung einer Waschmaschine ergibt, die von der Zentraleinheit genauer überwacht und analysiert werden soll. Es ist aber auch denkbar, wenn der Vergleich durch die Verarbeitungsvorrichtung eine Übereinstimmung zwischen der charakteristischen Signatur und der vorgegebenen Signatur ergibt, dass die charakteristische Signatur und/oder die charakteristische Signatur betreffende digitale Spannungs- und Strommesswerte verworfen werden. Dies kann der Fall sein, wenn der Vergleich eine Erkennung eines elektrischen Verbrauchers, beispielsweise eine Erkennung einer Stereoanlage ergibt, deren Energieverbrauch für die Zentraleinheit nicht von Interesse ist und deren Energieverbrauch nicht nachvollzogen werden soll. Somit kann auf intelligente Weise eine Voranalyse ausgeführt werden, sodass gezielt nur relevante Daten an die Zentraleinheit gesendet werden, wodurch die Datenkommunikation zwischen der Kommunikationsvorrichtung und der Zentraleinheit verringert werden kann.

Bei den die charakteristische Signatur betreffende digitale Spannungs- und Strommesswerten kann es sich auch um abgeleitete Größen, wie zum Beispiel Harmonische, Wirkleistung und/oder Blindleistung, handeln. Die Verarbeitungseinrichtung kann die Größen lokal bestimmen, da in der vorgegebenen Signatur solche Größen enthalten sein können, die live (d.h. in Echtzeit) abgeglichen werden (Livestream der charakteristischen Signaturen).

Die vorgegebene Signatur kann in der ersten Speichervorrichtung gespeichert sein. Zusätzlich oder alternativ ist es denkbar, dass die vorgegebene Signatur in einer zweiten Speichervorrichtung in der Zentraleinheit gespeichert ist. In diesem Fall ist es möglich, dass das Messsystem jeweils für einen Vergleich die vorgegebene Signatur von der Zentraleinheit empfängt. Insbesondere kann es sich bei der zweiten Speichervorrichtung um eine Cloud-Speichervorrichtung handeln.

Um neu hinzugekommene elektrische Verbraucher verarbeiten zu können, kann die erste Speichervorrichtung und/oder die zweite Speichervorrichtung dazu eingerichtet sein, wenn der Vergleich durch die Verarbeitungsvorrichtung keine Übereinstimmung zwischen der charakteristischen Signatur und der vorgegebenen Signatur ergibt, die charakteristische Signatur in der ersten Speichervorrichtung und/oder der zweiten Speichervorrichtung zu speichern. Insbesondere können neue Messdaten bzw. Signaturen an die Zentraleinheit gesendet werden, in der mit Hilfe spezieller Detektionsalgorithmen bestimmt werden kann, um welches elektrische Gerät es sich bei der nicht erkannten charakteristischen Signatur handelt.

Hat die Zentraleinheit basierend auf einer neuen Signatur einen neuen elektrischen Verbraucher erkannt, so kann die Zentraleinheit zur zukünftigen Bestimmung des neuen elektrischen Verbrauchers eine neue vorgegebene Signatur an das Messsystem senden. Zu diesem Zweck kann die Kommunikationsvorrichtung dazu eingerichtet sein, die vorgegebene Signatur von der Zentraleinheit zu empfangen und diese an die Verarbeitungsvorrichtung zu senden. Die Verarbeitungsvorrichtung kann die empfangene vorgegebene Signatur anschließend für einen Vergleich nutzen.

Charakteristische Signaturen von elektrischen Verbrauchern können sich alterungsbedingt über der Zeit ändern. Oft ändert sich die charakteristische Signatur dabei nur leicht. Solche Änderungen (im Zeitbereich, im Frequenzbereich und/oder von Strom- bzw. Spannungs-Peaks) können Rückschlüsse über einen Verschleiß des elektrischen Verbrauchers ermöglichen. So kann beispielsweise eine schadhafte Dichtung an einem Kühlschrank zu einer erhöhten Energieaufnahme führen. Um Wartungsarbeiten oder Instandhaltungsmaßnahmen an einem elektrischen Verbraucher bereits vor einem Fehler an oder einem Ausfall des elektrischen Verbrauchers einleiten zu können, kann die Verarbeitungsvorrichtung dazu eingerichtet sein, wenn der Vergleich der charakteristischen Signatur mit der vorgegebenen Signatur eine Abweichung ergibt, die über einem ersten Schwellenwert jedoch unter einem zweiten Schwellenwert liegt, eine Ausgabe eines Signals, insbesondere einer Nachricht, die einen Verschleiß signalisiert, an die Zentraleinheit zu initiieren. Die Zentraleinheit kann dann entsprechend Wartungs- bzw. Instandhaltungsmaßnahmen in Auftrag geben. Dazu ist denkbar, dass die Zentraleinheit automatisch einen Auftrag (beispielsweise mit Hilfe einer Email) an eine Wartungsfirma schickt.

Um die Vergleichsgenauigkeit der Verarbeitungsvorrichtung zu verbessern, kann das Messsystem ferner eine Maschinenlernvorrichtung umfassen, die dazu eingerichtet ist, basierend auf einem Trainingssatz von Vergleichsergebnissen zwischen charakteristischen Signaturen und vorgegebenen Signaturen, den Vergleich der charakteristischen Signatur mit der vorgegebenen Signatur durch die Verarbeitungsvorrichtung zu trainieren. Die Maschinenlernvorrichtung kann in der Verarbeitungsvorrichtung vorgesehen sein. Bei dem Trainingssatz von Vergleichsergebnissen kann es sich um einen Datensatz handeln, den die Maschinenlernvorrichtung von der Zentraleinheit empfängt und der zur Verbesserung des Vergleichs durch die Verarbeitungsvorrichtung verwendet wird. Insbesondere kann der Trainingssatz in der Zentraleinheit (oder einer externen Trainingseinheit) durch Vergleiche und Verifikationen zwischen verschiedenen charakteristischen Signaturen erzeugt bzw. erweitert werden. Dabei kann eine Erstellung bzw. Erweiterung eines Trainingssatzes die Schritte Erstellen, Trainieren und Bereitstellen des Trainingssatzes umfassen.

Um Gesamtverbrauchsdaten aufzuschlüsseln und in kleine Einheiten, beispielsweise einen Verbrauch einzelner Haushaltsgeräte, zu zerlegen, kann die Verarbeitungsvorrichtung auf die digitalen Spannungs- und Strommesswerte einen frei programmierbaren Algorithmus, beispielsweise einen Energie-Disaggregations-Algorithmus, anwenden. Um für verschiedene Netzzustände elektrische Verbraucher mit einer hohen Genauigkeit ermitteln zu können, kann die Kommunikationsvorrichtung ferner dazu eingerichtet sein, einen frei programmierbaren Algorithmus, beispielsweise einen Energie-Disaggregations-Algorithmus, von der Zentraleinheit zu empfangen und den Algorithmus an die Verarbeitungsvorrichtung zu senden, und die Verarbeitungsvorrichtung dazu eingerichtet sein, auf die digitalen Spannungs- und Strommesswerte den Algorithmus anzuwenden, um die verarbeiteten digitalen Daten zu bestimmen. Bei dem Energie-Disaggregations-Algorithmus kann es sich beispielsweise um Discriminative Disaggregation Sparse Coding, DDSC, Energy Disaggregation via Particle Filtering, EDPF, oder Additive Factorial Approximate Maximum A Posteriori, AFAMAP, -basierte Algorithmen handeln. So ist es möglich, dass die Verarbeitungsvorrichtung verschiedene Energie-Disaggregations-Algorithmen auf die digitalen Spannungs- und Strommesswerte anwendet. Ferner kann die Zentraleinheit als Update-Einheit für die Verarbeitungsvorrichtung agieren.

Um Rückschlüsse hinsichtlich des Zustandes des elektrischen Energienetzes zu ermöglichen, kann die Verarbeitungsvorrichtung des Weiteren dazu eingerichtet sein, basierend auf den digitalen Spannungs- und Strommesswerten Wirkleistungswerte, Blindleistungswerte, Scheinleistungswerte und/oder Phasenverschiebungswerte zu berechnen, und diese als verarbeitete digitale Daten an die Zentraleinheit zu senden. Insbesondere ist es dadurch möglich, lokale Analysen hinsichtlich der Qualität des elektrischen Energienetzes bzw. Aussagen hinsichtlich eines Verschmutzungsgrades des elektrischen Energienetzes bereitzustellen. Es ist auch möglich, dass die Wirkleistungswerte, Blindleistungswerte, Scheinleistungswerte und/oder Phasenverschiebungswerte mit Messwerten des digitalen Stromzählers verglichen werden. Dadurch können Messungenauigkeiten frühzeitig erkannt werden.

Um die Menge der von der Kommunikationsvorrichtung an die Zentraleinheit gesendeten Daten weiter zu verringern, kann die Verarbeitungsvorrichtung dazu eingerichtet sein, die digitalen Spannungs- und Strommesswerte zu komprimieren. Die Komprimierung kann insbesondere im Rahmen der Erzeugung der charakteristischen Signatur durch die Verarbeitungsvorrichtung erfolgen. Ferner können die Daten vor dem Senden digital signiert werden.

In einer weiteren Ausführungsform ist die Verarbeitungsvorrichtung dazu eingerichtet, basierend auf den digitalen Spannungs- und Strommesswerten der Spannungs- und Strommessvorrichtung und der von dem geeichten digitalen Stromzähler erfassten elektrischen Arbeit die verarbeiteten digitalen Daten zu bestimmen. So ist es möglich, beispielsweise zur Überprüfung, ob die von der Spannungs- und Strommessvorrichtung erzeugten digitalen Spannungs- und Strommesswerte korrekt bestimmt wurden, mit Hilfe der Messdaten von dem geeichten digitalen Stromzähler eine Datenverifikation vorzunehmen. Liefert die Datenverifikation einen Fehler, so kann dies ein Hinweis sein, dass die Spannungs- und Strommessvorrichtung ausgetauscht bzw. neu geeicht werden muss. Dies kann insbesondere dann von Vorteil sein, wenn die Spannung-und Strommessvorrichtung von Haus aus nicht amtlich geeicht ist.

Ferner kann die Kommunikationsvorrichtung dazu eingerichtet sein, die von dem geeichten digitalen Stromzähler erfasste elektrische Arbeit an die Zentraleinheit zu senden. Vor dem Senden können diese Daten komprimiert und/oder digital signiert werden.

Basierend auf den gemessenen Daten kann die Verarbeitungsvorrichtung und/oder die Zentraleinheit einen Zustandsbericht erstellen, der 3-Phasen Strom und Spannung, Oberschwingungen und Leistungen umfasst. Es können auch Berichte gemäß den Normen EN 50160 und EN 61000-2-4 erstellt werden.

Gemäß einer weiteren Ausführungsform kann die Kommunikationsvorrichtung dazu eingerichtet sein, Umweltmessdaten von einem Umweltsensor zu empfangen und die Umweltmessdaten an die Verarbeitungsvorrichtung zu senden, und die Verarbeitungsvorrichtung dazu eingerichtet sein, basierend auf den digitalen Spannungs- und Strommesswerten und den Umweltmessdaten die verarbeiteten digitalen Daten zu bestimmen. Mit Hilfe der Umweltmessdaten ist es möglich, weitere Rückschlüsse auf erkannte elektrische Verbraucher zu treffen. Beispielsweise kann es sich bei den Umweltmessdaten um Temperaturmessungen eines Temperatursensors handeln, der in der Nähe einer Klimaanlage angeordnet ist. Die gemessene Temperatur kann durch die Verarbeitungsvorrichtung für eine Bestimmung verwendet werden, ob die Klimaanlage in Betrieb ist. Dadurch kann die Verarbeitungsvorrichtung überprüfen, ob eine charakteristische Signatur der Klimaanlage korrekt erkannt wurde. Das Überprüfungsergebnis kann dann von der Verarbeitungsvorrichtung an die Maschinenlernvorrichtung zur Verbesserung der Signaturkennung gesendet werden.

Ferner betrifft die vorliegende Offenbarung ein Messsystem, welches geeicht und/oder gemäß der Measuring Instruments Directive, MID, zertifiziert ist.

Ein weiterer Aspekt der vorliegenden Offenbarung betrifft eine Messinfrastruktur mit einem vorstehend beschriebenes Messsystem und einer Zentraleinheit.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren und Vorrichtungen ergeben sich aus der nachfolgenden Beschreibung von Ausführungsbeispielen und der Figur.

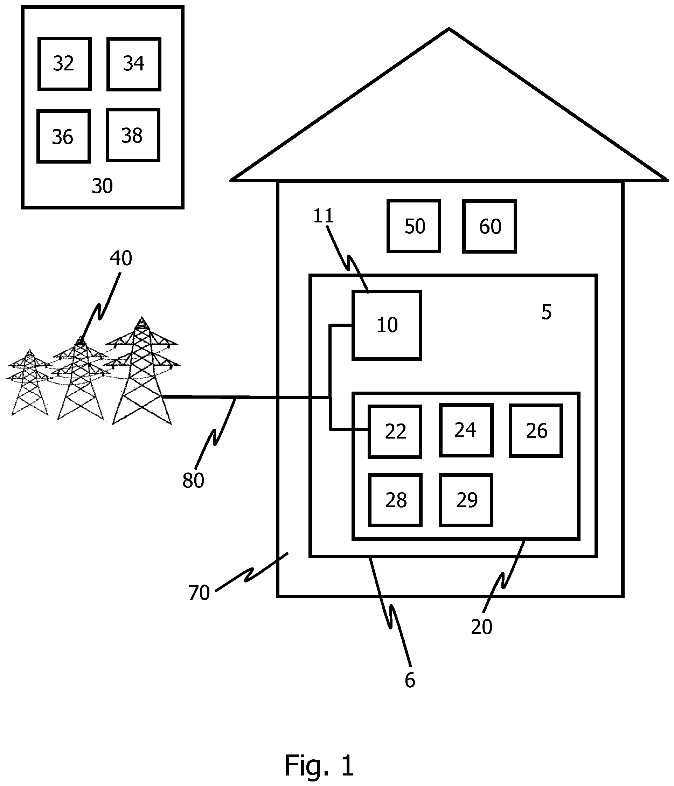

- Fig. 1: zeigt eine schematische Darstellung eines Ausführungsbeispiels eines Messsystems mit einem geeichten digitalen Stromzähler und einer Spannungs- und Strommessvorrichtung.

### DETAILLIERTE BESCHREIBUNG

Die Fig. 1 zeigt eine schematische Darstellung eines Ausführungsbeispiels eines Messsystems 5 mit einem geeichten digitalen Stromzähler 10 und einer Spannungs- und Strommessvorrichtung 22. Insbesondere umfasst das Messsystem 5 neben dem geeichten digitalen Stromzähler 10 und der zusätzlichen Spannungs- und Strommessvorrichtung 22 eine erste Verarbeitungsvorrichtung 24, eine erste Kommunikationsvorrichtung 26, eine erste Speichervorrichtung 28 und eine erste Maschinenlernvorrichtung 29.

Bei der Spannungs- und Strommessvorrichtung 22 handelt es sich um eine nicht in einem eichrelevanten Teil des Messsystems 5 befindliche, insbesondere eine zusätzliche, Spannungs- und Strommessvorrichtung ohne Rückwirkung auf den eichrelevanten Teil des Messsystems, bei der ersten Verarbeitungsvorrichtung 24 handelt es sich um eine frei programmierbare, insbesondere eine zusätzliche, Verarbeitungsvorrichtung, und bei der ersten Kommunikationsvorrichtung 26 handelt es sich um eine zusätzliche Kommunikationsvorrichtung.

Der geeichte digitale Stromzähler 10, die Spannungs- und Strommessvorrichtung 22, die erste Verarbeitungsvorrichtung 24, die erste Kommunikationsvorrichtung 26, die erste Speichervorrichtung 28 und die erste Maschinenlernvorrichtung 29 sind in einem Gehäuse 20, insbesondere einem verplombten Gehäuse 20 (nicht geeichter bzw. nicht eichrelevanter Bereich), angeordnet. Auch der digitale Stromzähler 10 befindet sich in einem (separat) verplombten Gehäuse 11 (geeichter bzw. eichrelevanter Bereich). Ferner befindet sich das Messsystem 5 in einem Gehäuse 6. Der geeichte digitale Stromzähler 10 und der nicht geeichte Bereich 20 können auch in getrennten Gehäusen entkoppelt voneinander montiert werden. Die erste Maschinenlernvorrichtung 29 kann optional vorgesehen sein.

Das Messsystem 5 ist in einem Gebäude 70 angeordnet. Ein Energieversorgungsnetz 40 versorgt über eine Versorgungsleitung 80 das Gebäude 70 mit Strom. In dem Gebäude 70 befinden sich eine Vielzahl über ein Hausnetz verbundene elektrische Verbraucher, von denen nur der elektrische Verbraucher 60 beispielhaft gezeigt ist. Bei dem elektrischen Verbraucher 60 handelt es sich in diesem Ausführungsbeispiel um eine Waschmaschine. Ferner befindet sich in dem Gebäude 70 ein optionaler Umweltsensor 50.

An die Versorgungsleitung 80 sind sowohl der digitale Stromzähler 10 als auch die Spannungs- und Strommessvorrichtung 22 angeschlossen. Der geeichte digitale Stromzähler 10 bestimmt die in dem Gebäude 70 verbrauchte Gesamtenergie, insbesondere die von dem elektrischen Verbraucher 60 verbrauchte elektrische Energie in Kilowattstunden (kWh). Die verbrauchte elektrische Energie wird von dem Betreiber des Energieversorgungsnetzes 40 zur Abrechnung der Energiekosten gegenüber dem Eigentümer des Gebäudes 70 verwendet.

Zusätzlich misst die Spannungs- und Strommessvorrichtung 22 im Kilohertzbereich die durch die elektrische Leitung 80 fließenden Ströme und die an der elektrischen Leitung 80 anliegenden Spannungen. Dazu umfasst die Spannungs- und Strommessvorrichtung 22 einen Stromsensor, einen Spannungssensor und einen Analog/Digital-Wandler (in Fig. 1 nicht gezeigt) zum Wandeln analoger Spannungs- und Strommesswerte in digitale Spannungs- und Strommesswerte. Die Spannungs- und Strommessvorrichtung 22 misst mindestens 4000 Spannungs- und Strommesswerte pro Sekunde. Vorzugsweise kann die Spannungs- und Strommessvorrichtung 10000 bis 15000 Spannungs- und Strommesswerte pro Sekunde, weiter vorzugsweise 10000 Spannungs- und Strommesswerte pro Sekunde messen. Die Spannungs- und Strommessvorrichtung 22 bestimmt insbesondere Spannungs- und Strommesswerte in einem Drehstromsystem in jeder der drei Phasen. Die erste Speicherungsvorrichtung 28 ist dazu eingerichtet, die von der Spannungs- und Strommessvorrichtung 22 bestimmten digitalen Spannungs- und Strommesswerte zu speichern.

Ferner zeigt die Fig. 1 eine Zentraleinheit 30, welche eine zweite Speicherungsvorrichtung 32, eine zweite Verarbeitungsvorrichtung 34, eine zweite Kommunikationsvorrichtung 36 und eine zweite Maschinenlernvorrichtung 38 umfasst. Zur einfachen Unterscheidbarkeit werden in diesem Ausführungsbeispiel die Einheiten des Messsystems 5 als "erste" Einheiten und die Einheiten der Zentraleinheit 30 als "zweite" Einheiten bezeichnet.

Da die Spannungs- und Strommessvorrichtung 22 durch die Abtastfrequenz im Kilohertzbereich eine große Menge an Messdaten generiert, ist es nur mit einem relativ großen Aufwand möglich, sämtliche Messdaten über die erste Kommunikationsvorrichtung 26 an die zweite Kommunikationsvorrichtung 36 in der Zentraleinheit 30 zu senden. Aus diesem Grund erfolgt in dem Messsystem 5, d.h. durch die erste Verarbeitungsvorrichtung 24, eine Voranalyse und Aussortierung der von der Spannungs- und Strommessvorrichtung 22 erzeugten Messdaten, sodass ein Datenvolumen der von der ersten Verarbeitungsvorrichtung 24 verarbeiteten digitalen Daten geringer als ein Datenvolumen der gemessenen Spannungs- und Strommesswerte ist. Dies bedeutet, dass nicht alle von der Spannungs- und Strommessvorrichtung 22 erzeugten Spannungs- und Strommesswerte durch die erste Kommunikationsvorrichtung 26 an die Zentraleinheit 30 gesendet werden. So wird bei dem vorliegenden Ausführungsbeispiel ein intelligenter Kompromiss zwischen einem Verarbeiten aller Messdaten in dem Messsystem 5 und einem Senden aller Messdaten an die Zentraleinheit 30 zum Verarbeiten der Daten gewählt.

Zur Implementierung einer intelligenten Voranalyse bzw. Aussortierung ist die erste Verarbeitungsvorrichtung 24 dazu eingerichtet, einen Anstieg über einen Schwellenwert und/oder einen Abfall unter einen Schwellenwert der digitalen Spannungs- und/oder Strommesswerte zu bestimmen. Insbesondere ist die erste Verarbeitungsvorrichtung 24 dazu eingerichtet, zu erkennen, wenn der elektrische Verbraucher 50 in Betrieb bzw. außer Betrieb genommen wird. Der Schwellenwert bzw. das Auslöseereignis kann auch auf einem Leistungswert basieren.

Zur weiteren Verarbeitung der Daten ist die erste Speicherungsvorrichtung 28 dazu eingerichtet ist, in Reaktion auf die Bestimmung eines Anstiegs über einen Schwellenwert und/oder eines Abfalls unter einen Schwellenwert der digitalen Spannungs- und/oder Strommesswerte durch die erste Verarbeitungsvorrichtung 24, für ein Zeitintervall, welches dem Anstieg und/oder dem Abfall entspricht, die digitalen Spannungs- und Strommesswerte zu speichern. Auf diese gespeicherten Daten hat die erste Verarbeitungsvorrichtung 24 Zugriff, sodass die erste Verarbeitungsvorrichtung 24 diese Daten verarbeiten kann.

Basierend auf den für das Zeitintervall gespeicherten digitalen Spannungs- und Strommesswerten erzeugt die erste Verarbeitungsvorrichtung 24 eine charakteristische Signatur, beispielsweise einen Fingerprint. In diesem Ausführungsbeispiel umfasst der Fingerprint einen charakteristischen Verlauf von Leistungswerten über ein Zeitintervall.

Die erste Verarbeitungsvorrichtung 24 vergleicht die charakteristische Signatur mit einer vorgegebenen Signatur. In dem vorliegenden Ausführungsbeispiel vergleicht die erste Verarbeitungsvorrichtung 24 die anhand der Messdaten bestimmten charakteristischen Signatur mit einer bekannten Signatur der Waschmaschine 50. Ergibt der Vergleich eine Übereinstimmung zwischen der charakteristischen Signatur und der vorgegebenen Signatur, so hat die erste Verarbeitungsvorrichtung 24 die Waschmaschine 50 erkannt.

Ist die Waschmaschine 50 für die Zentraleinheit 30 von Interesse, d.h., besteht in der Zentraleinheit 30 ein Interesse, den Verbrauch an elektrischer Energie durch die Waschmaschine 50 über der Zeit nachzuvollziehen und nachzubearbeiten, so werden die Messdaten betreffend die Waschmaschine 50, optional zusammen mit dem Fingerprint, über die erste Kommunikationsvorrichtung 26 an die Zentraleinheit 30 gesendet. Die von der zweiten Kommunikationsvorrichtung 36 der Zentraleinheit 30 empfangenen Spannungs- und Strommesswerte werden in der zweiten Speichervorrichtung 32 gespeichert und können dort von der zweiten Verarbeitungsvorrichtung 34 weiterverarbeitet werden. Beispielsweise können die Messdaten in der Zentraleinheit 30 über der Zeit ausgewertet werden. Ist die Waschmaschine 50 für die Zentraleinheit 30 jedoch von keiner Bedeutung, so kann auch vorgesehen sein, dass die die Waschmaschine 50 betreffenden Spannungs- und Strommesswerte verworfen werden, d.h. von der ersten Speichervorrichtung 28 gelöscht und nicht an die Zentraleinheit 30 gesendet werden.

Es kann auch vorkommen, dass in dem Gebäude 70 neue elektrische Verbraucher an das elektrische Hausnetz angeschlossen werden, welche dem Messsystem 5 bzw. der Zentraleinheit 30 nicht bekannt sind. So ist es denkbar, dass sich der Bewohner des Gebäudes 70 einen Weinkühlschrank (in Fig. 1 nicht gezeigt) kauft und diesen neu an das elektrische Hausnetz des Gebäudes 70 anschließt. In diesem Fall kann vorgesehen sein, wenn der Vergleich zwischen der charakteristischen Signatur und den bekannten vorgegebenen Signaturen keine Übereinstimmung ergibt, dass die erste Kommunikationsvorrichtung 26 die entsprechenden Spannungs- und Strommesswerte an die Zentraleinheit 30 sendet, in der von der zweiten Verarbeitungsvorrichtung 34 überprüft wird, ob es sich bei der neuen Signatur bzw. den diese Signatur betreffenden Spannungs- und Strommesswerten um einen neuen elektrischen Verbraucher bzw. um welchen neuen elektrischen Verbraucher es sich handelt. So kann die zweite Verarbeitungsvorrichtung 34 der Zentraleinheit 30 die neu bestimmte Signatur als "Weinkühlschrank" bestimmen und kennzeichnen, und diese Signatur in den Satz von vorgegebenen Signaturen aufnehmen, sodass die erste Verarbeitungsvorrichtung 24 des Messsystems 5 zukünftig immer den Weinkühlschrank erkennen kann. Dabei kann die zweite Verarbeitungsvorrichtung 34 der ersten Bearbeitungsvorrichtung 24 vorgeben, ob ein erkannter Betrieb des Weinkühlschranks der Zentraleinheit 30 berichtet werden soll, was ein Senden der entsprechenden Spannungs- und Strommesswerte an die Zentraleinheit 30 umfasst, oder ob den Weinkühlschrank betreffende Spannungs- und Strommesswerte verworfen werden sollen.

Charakteristische Signaturen von elektrischen Verbrauchern können sich alterungsbedingt über der Zeit ändern. Oft ändert sich die charakteristische Signatur dabei nur leicht. Solche Änderungen können Rückschlüsse über einen Verschleiß des elektrischen Verbrauchers ermöglichen. Um Wartungsarbeiten oder Instandhaltungsmaßnahmen an einem elektrischen Verbraucher bereits vor einem Fehler an oder einem Ausfall des elektrischen Verbrauchers einleiten zu können, kann die erste Verarbeitungsvorrichtung 24 dazu eingerichtet sein, wenn der Vergleich der charakteristischen Signatur mit der vorgegebenen Signatur eine Abweichung ergibt, die über einem ersten Schwellenwert jedoch unter einem zweiten Schwellenwert liegt, eine Ausgabe eines Warnsignals, insbesondere einer Nachricht, die einen Verschleiß signalisiert, an die Zentraleinheit 30 zu senden. Die Zentraleinheit 30 kann dann entsprechend Wartungs- bzw. Instandhaltungsmaßnahmen in Auftrag geben.

Um die Erkennung von elektrischen Verbrauchern 50 durch die erste Verarbeitungsvorrichtung 24 ständig zu verbessern, kann in dem Messsystem 5 die erste Maschinenlernvorrichtung 29 vorgesehen sein, die dazu eingerichtet ist, basierend auf einem Trainingssatz von Vergleichsergebnissen zwischen charakteristischen Signaturen und vorgegebenen Signaturen, den Vergleich der charakteristischen Signatur mit der vorgegebenen Signatur durch die erste Verarbeitungsvorrichtung 24 zu trainieren. Die erste Maschinenlernvorrichtung 29 kann auch in der ersten Verarbeitungsvorrichtung 24 vorgesehen sein. Des Weiteren kann das Trainieren des Trainingssatzes auch durch die zweite Maschinenlernvorrichtung 38 in der Zentraleinheit 30 erfolgen.

Die erste Kommunikationsvorrichtung 26 ist ferner dazu eingerichtet, einen Energie-Disaggregations-Algorithmus von der Zentraleinheit 30 zu empfangen und den Energie-Disaggregations-Algorithmus an die erste Verarbeitungsvorrichtung 24 zu senden. Insbesondere ist die erste Verarbeitungsvorrichtung 24 dazu eingerichtet, auf die digitalen Spannungs- und Strommesswerte den empfangenen Energie-Disaggregations-Algorithmus anzuwenden, um die verarbeiteten digitalen Daten zu bestimmen.

Um Aussagen über die Qualität des elektrischen Energienetzes 40 vornehmen zu können, ist die erste Verarbeitungsvorrichtung 24 ferner dazu eingerichtet, basierend auf den digitalen Spannungs- und Strommesswerten Wirkleistungswerte, Blindleistungswerte, Scheinleistungswerte und/oder Phasenverschiebungswerte zu berechnen, und diese als verarbeitete digitale Daten an die Zentraleinheit 30 zu senden.

Zur weiteren Reduktion der von dem Messsystem 5 an die Zentraleinheit 30 gesendeten Daten, ist die erste Verarbeitungsvorrichtung 24 dazu eingerichtet, die digitalen Spannungs- und Strommesswerte vor einem Senden durch die erste Kommunikationsvorrichtung 26 an die Zentraleinheit zu komprimieren. Ferner kann die Verarbeitungsvorrichtung 24 die Daten vor dem Senden digital signieren.

Gemäß einer vorteilhaften Ausführungsform ist die erste Verarbeitungsvorrichtung 24 dazu eingerichtet, basierend auf den digitalen Spannungs- und Strommesswerten und der von dem geeichten digitalen Stromzähler 10 erfassten elektrischen Arbeit die verarbeiteten digitalen Daten zu bestimmen. So werden gemäß dieser Ausführungsform nicht nur die Messdaten der Spannungs- und Strommessvorrichtung 22, sondern auch die Messdaten von dem geeichten digitalen Stromzähler 10 durch die erste Verarbeitungsvorrichtung 24 verarbeitet. Beispielsweise verwendet die Verarbeitungsvorrichtung 24 die Messdaten des digitalen Stromzählers 10 um die Messdaten der Spannungs- und Strommessvorrichtung 22 auf Plausibilität zu prüfen. Die erste Kommunikationsvorrichtung 26 kann ferner dazu eingerichtet sein, die von dem geeichten digitalen Stromzähler 10 erfasste elektrische Arbeit an die Zentraleinheit 30 zu senden. In diesem Fall kann die Datenverarbeitung in der zweiten Verarbeitungsvorrichtung 34 stattfinden. Vor dem Senden können die Daten auch komprimiert und/oder digital signiert werden.

Ist ein Umweltsensor 50 in dem Gebäude 70 installiert, so kann die erste Kommunikationsvorrichtung 26 dazu eingerichtet sein, Umweltmessdaten von dem Umweltsensor 50 zu empfangen und die Umweltmessdaten an die erste Verarbeitungsvorrichtung 24 zu senden. In diesem Fall ist die erste Verarbeitungsvorrichtung 24 dazu eingerichtet ist, basierend auf den digitalen Spannungs- und Strommesswerten der Spannungs- und Strommessvorrichtung 22 und den Umweltmessdaten die verarbeiteten digitalen Daten zu bestimmen.

In einem Ausführungsbeispiel ist der Umweltsensor 50 als ein Bewegungssensor ausgebildet, der zur Eingangskontrolle auf eine sich mit Hilfe eines Motors öffnenden und schließenden Eingangstür des Gebäudes 70 gerichtet ist. Erkennt der Bewegungssensor ein Öffnen bzw. Schließen der Eingangstür, was einen Betrieb des Motors umfasst, so kann diese Information von der ersten Verarbeitungsvorrichtung 24 zum Erkennen, Überprüfen oder Lernen einer charakteristischen Signatur des Motors verwendet werden.

Die vorliegende Offenbarung umfasst eine Identifizierung von angeschlossenen elektrischen Verbrauchern und eine Ermittlung deren Zustände, eine Vorverarbeitung von digitalisierten Messwerten und deren Komprimierung, ein Weiterleiten der komprimierten Messwerte an eine als ein Cloud-Rechner ausgebildete Zentraleinheit 30 für eine Datennachbearbeitung, ein Abgleichen und Aufbauen einer Datenbank aller angeschlossenen elektrischen Verbraucher in der als Cloud-Rechner ausgebildeten Zentraleinheit 30 und ein Update von lokalen Detektionsalgorithmen in dem Messsystem 5 mit Hilfe der Zentraleinheit.

Die vorliegende Offenbarung liefert eine Vielzahl von Vorteilen. So wird eine rechnerische Zerlegung des Gesamtverbrauchs in einzelne elektrische Verbraucher ermöglicht, d.h. eine Aufschlüsselung einer Vielzahl von elektrischen Verbrauchern im Gesamtenergieverbrauch bereitgestellt, ohne dass weitere Sensoren verwendet werden müssen. Des Weiteren wird die Ermittlung unterschiedlicher Zustände von elektrischen Verbrauchern und somit die Erfassung verschiedener Stufen im Alterungsprozess von elektrischen Verbrauchern ermöglicht. Es ist auch eine Datenerfassung zur Analyse des Zustands des elektrischen Energienetzes 40 möglich. Die vorliegende Offenbarung liefert die folgenden weiteren Vorteile: es erfolgt eine Kostenreduktion und Mehrwertsteigerung durch die Erweiterung bereits existierender moderner Messeinrichtungen. Es erfolgt eine Integration zusätzlicher elektronischer Komponenten zur hochfrequenten Messung von Spannungen und Strömen, insbesondere in einem Drehstromsystem, für eine lokale Datenverarbeitung und zur Funkkommunikation neben der bestehenden Hardware einer modernen Messeinrichtung. Dabei wird die Rückwirkungsfreiheit der eichrechtlich geschützten Mess-und Ableseelektronik der modernen Messeinrichtung berücksichtigt.

Durch die hochfrequente Messung (beispielsweise mit einer 10 kHz Abtastfrequenz) können mittels lokaler Datenanalyse zusätzliche neue Dienstleistungen geschaffen werden. Beispielsweise können Vorhersagen getroffen werden, wann elektrische Verbraucher gewartet bzw. wann sie ausgetauscht werden müssen. Ferner können lokale Energiequalitätsanalysen vorgenommen werden, um den Verschmutzungsgrad des elektrischen Energienetzes zu bestimmen. Die vorliegende Offenbarung liefert somit eine Plattform, welche Privat- und Geschäftskunden auch in Zukunft neue Dienstleistungen, die heute noch unbekannt sind, bereitstellen kann. Das Messsystem 5 ist ferner durch mehrfach gesicherte IT-Mechanismen fernwartbar und kann jederzeit mit neuer Anwendungssoftware ausgestattet werden.

Die Datenverbindung über die Kommunikationsvorrichtungen 26 und 36 liefert auch eine sichere Anbindung zur Zentraleinheit 30. Firmware-Updates können über einen sicheren Kanal ermöglicht werden. Es wird ferner eine Energietransparenz bei Privat- und Geschäftskunden bereitgestellt, was zur Steigerung der Energieeffizienz und Nachhaltigkeit führt. Des Weiteren werden kundenindividuelle Dienstleistungen, wie Alarmfunktionen für elektrische Verbraucher, ermöglicht.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Messsystem (5), umfassend
einen geeichten digitalen Stromzähler (10);
eine Spannungs- und Strommessvorrichtung (22), die dazu eingerichtet ist, digitale Spannungs- und Strommesswerte mit einer Abtastfrequenz im Kilohertzbereich zu erzeugen;
eine Verarbeitungsvorrichtung (24), die dazu eingerichtet ist, die digitalen Spannungs- und Strommesswerte zu verarbeiten, um verarbeitete digitale Daten zu bestimmen;
eine Kommunikationsvorrichtung (26), die dazu eingerichtet ist, die verarbeiteten digitalen Daten an eine Zentraleinheit (30) zu senden; und
eine erste Speicherungsvorrichtung (28), die dazu eingerichtet ist, die digitalen Spannungs- und Strommesswerte zu speichern,
**dadurch gekennzeichnet, dass**
die Verarbeitungsvorrichtung (24) dazu eingerichtet ist, einen Anstieg über einen Schwellenwert und/oder einen Abfall unter einen Schwellenwert der digitalen Spannungs- und/oder Strommesswerte zu bestimmen, und
die erste Speicherungsvorrichtung (28) dazu eingerichtet ist, in Reaktion auf die Bestimmung eines Anstiegs über einen Schwellenwert und/oder eines Abfalls unter einen Schwellenwert der digitalen Spannungs- und/oder Strommesswerte durch die Verarbeitungsvorrichtung, für ein Zeitintervall, welches dem Anstieg und/oder dem Abfall entspricht, die digitalen Spannungs- und Strommesswerte zu speichern.

2. Messsystem (5) nach Anspruch 1, wobei
der digitale Stromzähler (10) innerhalb eines eichrelevanten Teils des Messsystems (5) angeordnet ist, und
die Spannungs- und Strommessvorrichtung (22) außerhalb des eichrelevanten Teils des Messsystems (5) angeordnet ist.

3. Messsystem (5) nach einem der vorhergehenden Ansprüche, wobei
die Verarbeitungsvorrichtung (24) eine frei programmierbare, digitale Verarbeitungsvorrichtung ist und
die Kommunikationsvorrichtung (26) dazu eingerichtet ist, die Verarbeitungsvorrichtung (24) zu programmieren.

4. Messsystem (5) nach einem der vorhergehenden Ansprüche, wobei ein Datenvolumen der verarbeiteten digitalen Daten geringer als ein Datenvolumen der erzeugten Spannungs- und Strommesswerte ist.

5. Messsystem (5) nach Anspruch 1, wobei
die Verarbeitungsvorrichtung (24) dazu eingerichtet ist, basierend auf den für das Zeitintervall gespeicherten digitalen Spannungs- und Strommesswerten eine charakteristische Signatur zu erzeugen.

6. Messsystem (5) nach Anspruch 5, wobei
die Verarbeitungsvorrichtung (24) dazu eingerichtet ist, die charakteristische Signatur mit einer vorgegebenen Signatur zu vergleichen und in Abhängigkeit von dem Vergleich die Kommunikationsvorrichtung (26) zu instruieren, die für das Zeitintervall gespeicherten digitalen Spannungs- und Strommesswerte und/oder die charakteristische Signatur an die Zentraleinheit (30) zu senden.

7. Messsystem (5) nach Anspruch 6, wobei
die Verarbeitungsvorrichtung (24) dazu eingerichtet ist, wenn der Vergleich eine Übereinstimmung zwischen der charakteristischen Signatur und der vorgegebenen Signatur ergibt, die charakteristische Signatur und/oder die charakteristische Signatur betreffende digitale Spannungs- und Strommesswerte an die Zentraleinheit (30) zu senden, oder die charakteristische Signatur und/oder die charakteristische Signatur betreffende digitale Spannungs- und Strommesswerte zu verwerfen.

8. Messsystem (5) nach Anspruch 6 oder 7, wobei
die vorgegebene Signatur in der ersten Speichervorrichtung (28) und/oder in einer zweiten Speichervorrichtung (32) in der Zentraleinheit (30) gespeichert ist/sind.

9. Messsystem (5) nach Anspruch 8, wobei
die erste Speichervorrichtung (28) und/oder die zweite Speichervorrichtung (32) dazu eingerichtet ist/sind, wenn der Vergleich durch die Verarbeitungsvorrichtung (24) keine Übereinstimmung zwischen der charakteristischen Signatur und der vorgegebenen Signatur ergibt, die charakteristische Signatur in der ersten Speichervorrichtung (28) und/oder der zweiten Speichervorrichtung (32) zu speichern.

10. Messsystem (5) nach einem der Ansprüche 6 bis 9, wobei
die Kommunikationsvorrichtung (26) dazu eingerichtet ist, die vorgegebene Signatur von der Zentraleinheit (30) zu empfangen und die vorgegebene Signatur an die Verarbeitungsvorrichtung (24) zu senden.

11. Messsystem (5) nach einem der Ansprüche 6 bis 10, wobei
die Verarbeitungsvorrichtung (24) dazu eingerichtet ist, wenn der Vergleich der charakteristischen Signatur mit der vorgegebenen Signatur eine Abweichung ergibt, die über einem ersten Schwellenwert jedoch unter einem zweiten Schwellenwert liegt, die Verarbeitungsvorrichtung (24) dazu eingerichtet ist, eine Ausgabe eines Signals zu initiieren.

12. Messsystem (5) nach einem der Ansprüche 6 bis 11, ferner umfassend
eine Maschinenlernvorrichtung (29), die dazu eingerichtet ist, basierend auf einem Trainingssatz von Vergleichsergebnissen zwischen charakteristischen Signaturen und vorgegebenen Signaturen, den Vergleich der charakteristischen Signatur mit der vorgegebenen Signatur durch die Verarbeitungsvorrichtung (24) zu trainieren.

13. Messsystem (5) nach einem der vorhergehenden Ansprüche,
wobei die Kommunikationsvorrichtung (26) dazu eingerichtet ist, einen frei programmierbaren Algorithmus von der Zentraleinheit (30) zu empfangen und den Algorithmus an die Verarbeitungsvorrichtung (24) zu senden, und
die Verarbeitungsvorrichtung (24) dazu eingerichtet ist, auf die digitalen Spannungs- und Strommesswerte den Algorithmus anzuwenden, um die verarbeiteten digitalen Daten zu bestimmen; und/oder
wobei die Verarbeitungsvorrichtung (24) dazu eingerichtet ist, basierend auf den digitalen Spannungs- und Strommesswerten Wirkleistungswerte, Blindleistungswerte, Scheinleistungswerte und/oder Phasenverschiebungswerte zu berechnen, und diese als verarbeitete digitale Daten an die Zentraleinheit (30) zu senden; und/oder
wobei die Verarbeitungsvorrichtung (24) dazu eingerichtet ist, die digitalen Spannungs- und Strommesswerte zu komprimieren; und/oder
wobei die Kommunikationsvorrichtung (26) dazu eingerichtet ist, Umweltmessdaten von einem Umweltsensor (50) zu empfangen und die Umweltmessdaten an die Verarbeitungsvorrichtung (24) zu senden, und
die Verarbeitungsvorrichtung (24) dazu eingerichtet ist, basierend auf den digitalen Spannungs- und Strommesswerten und den Umweltmessdaten die verarbeiteten digitalen Daten zu bestimmen; und/oder
wobei das Messsystem (5) geeicht und/oder gemäß der Measuring Instruments Directive, MID, zertifiziert ist.

14. Messinfrastruktur, umfassend
das Messsystem (5) nach einem der vorhergehenden Ansprüche; und
eine Zentraleinheit (30).

## Claims

1. Measuring system (5), comprising
a calibrated digital electricity meter (10);
a voltage and current measuring device (22), which is configured to generate digital voltage and current measurement values at a sampling frequency in the kilohertz range;
a processing device (24), which is configured to process the digital voltage and current measurement values in order to determine processed digital data;
a communication device (26), which is configured to send the processed digital data to a central unit (30); and
a first storage device (28), which is configured to store the digital voltage and current measurement values,
**characterized in that**
the processing device (24) is configured to determine a rise above a threshold value and/or a drop below a threshold value of the digital voltage and/or current measurement values, and
the first storage device (28) is configured, in response to the determination of a rise above a threshold value and/or a drop below a threshold value of the digital voltage and/or current measurement values by the processing device, to store the digital voltage and current measurement values for a time interval which corresponds to the rise and/or the drop.

2. Measuring system (5) according to claim 1, wherein
the digital electricity meter (10) is arranged within a calibration-relevant part of the measuring system (5), and
the voltage and current measuring device (22) is arranged outside the calibration-relevant part of the measuring system (5).

3. Measuring system (5) according to one of the preceding claims, wherein
the processing device (24) is a freely programmable digital processing device, and
the communication device (26) is configured to program the processing device (24).

4. Measuring system (5) according to one of the preceding claims, wherein
a data volume of the processed digital data is smaller than a data volume of the generated voltage and current measurement values.

5. Measuring system (5) according to claim 1, wherein
the processing device (24) is configured to generate a characteristic signature based on the digital voltage and current measurement values stored for the time interval.

6. Measuring system (5) according to claim 5, wherein
the processing device (24) is configured to compare the characteristic signature with a predetermined signature and, depending on the comparison, to instruct the communication device (26) to send the digital voltage and current measurement values stored for the time interval and/or the characteristic signature to the central unit (30).

7. Measuring system (5) according to claim 6, wherein
the processing device (24) is configured, if the comparison reveals a match between the characteristic signature and the predetermined signature, to send the characteristic signature and/or the digital voltage and current measurement values relating to the characteristic signature to the central unit (30), or to discard the characteristic signature and/or the digital voltage and current measurement values relating to the characteristic signature.

8. Measuring system (5) according to claim 6 or 7, wherein
the predetermined signature is/are stored in the first storage device (28) and/or in a second storage device (32) in the central unit (30).

9. Measuring system (5) according to claim 8, wherein
the first storage device (28) and/or the second storage device (32) is/are configured, if the comparison by the processing device (24) does not reveal a match between the characteristic signature and the predetermined signature, to store the characteristic signature in the first storage device (28) and/or the second storage device (32).

10. Measuring system (5) according to one of claims 6 to 9, wherein
the communication device (26) is configured to receive the predetermined signature from the central unit (30) and to send the predetermined signature to the processing device (24).

11. Measuring system (5) according to one of claims 6 to 10, wherein
the processing device (24) is configured, if the comparison of the characteristic signature with the predetermined signature reveals a deviation that is above a first threshold value but below a second threshold value, to initiate output of a signal.

12. Measuring system (5) according to one of claims 6 to 11, further comprising
a machine learning device (29), which is configured to train the comparison of the characteristic signature with the predetermined signature by the processing device (24) based on a training set of comparison results between characteristic signatures and predetermined signatures.

13. Measuring system (5) according to one of the preceding claims,
wherein the communication device (26) is configured to receive a freely programmable algorithm from the central unit (30) and to send the algorithm to the processing device (24), and
the processing device (24) is configured to apply the algorithm to the digital voltage and current measurement values in order to determine the processed digital data; and/or
wherein the processing device (24) is configured to calculate active power values, reactive power values, apparent power values, and/or phase shift values based on the digital voltage and current measurement values, and to send these as processed digital data to the central unit (30); and/or
wherein the processing device (24) is configured to compress the digital voltage and current measurement values; and/or
wherein the communication device (26) is configured to receive environmental measurement data from an environmental sensor (50) and to send the environmental measurement data to the processing device (24), and
the processing device (24) is configured to determine the processed digital data based on the digital voltage and current measurement values and the environmental measurement data; and/or
wherein the measuring system (5) is calibrated and/or certified according to the Measuring Instruments Directive (MID).

14. Measuring infrastructure, comprising
the measuring system (5) according to one of the preceding claims; and
a central unit (30).

## Revendications

1. Système de mesure (5), comprenant:
un compteur électrique numérique étalonné (10);
un dispositif de mesure de tension et de courant (22) qui est conçu pour générer des valeurs de mesure numériques de tension et de courant avec une fréquence d'échantillonnage dans la plage des kilohertz;
un dispositif de traitement (24) qui est conçu pour traiter les valeurs de mesure numériques de tension et de courant afin de déterminer des données numériques traitées;
un dispositif de communication (26) qui est conçu pour envoyer les données numériques traitées à une unité centrale (30); et
un premier dispositif de stockage (28) qui est conçu pour stocker les valeurs numériques de mesure de tension et de courant,
**caractérisé en ce que**
le dispositif de traitement (24) est conçu pour déterminer une augmentation au-dessus d'une valeur de seuil et/ou une diminution en dessous d'une valeur de seuil des valeurs de mesure numériques de tension et/ou de courant, et
en réponse à la détermination par le dispositif de traitement d'une augmentation au-dessus d'une valeur de seuil et/ou d'une diminution en dessous d'une valeur de seuil des valeurs de mesure numériques de tension et/ou de courant, le premier dispositif de stockage (28) est conçu pour stocker les valeurs de mesure numériques de tension et de courant pendant un intervalle de temps correspondant à l'augmentation et/ou à la diminution.

2. Système de mesure (5) selon la revendication 1, dans lequel
le compteur électrique numérique (10) est disposé à l'intérieur d'une partie de vérification du système de mesure (5), et
le dispositif de mesure de tension et de courant (22) est disposé à l'extérieur de la partie de vérification du système de mesure (5).

3. Système de mesure (5) selon l'une quelconque des revendications précédentes, dans lequel
le dispositif de traitement (24) est un dispositif de traitement numérique librement programmable, et
le dispositif de communication (26) est conçu pour programmer le dispositif de traitement (24).

4. Système de mesure (5) selon l'une quelconque des revendications précédentes, dans lequel
un volume de données des données numériques traitées est inférieur à un volume de données des valeurs de mesure de tension et de courant générées.

5. Système de mesure (5) selon la revendication 1, dans lequel
le dispositif de traitement (24) est conçu pour générer une signature caractéristique sur la base des valeurs de mesure numériques de tension et de courant stockées pour l'intervalle de temps.

6. Système de mesure (5) selon la revendication 5, dans lequel
le dispositif de traitement (24) est conçu pour comparer la signature caractéristique à une signature prédéterminée et, en fonction de la comparaison, pour ordonner au dispositif de communication (26) d'envoyer à l'unité centrale (30) les valeurs de mesure numériques de tension et de courant stockées et/ou la signature caractéristique pour l'intervalle de temps.

7. Système de mesure (5) selon la revendication 6, dans lequel
le dispositif de traitement (24) est conçu, lorsque la comparaison donne une correspondance entre la signature caractéristique et la signature prédéterminée, pour envoyer à l'unité centrale (30) des valeurs de mesure numériques de tension et de courant concernant la signature caractéristique et/ou la signature caractéristique, ou pour rejeter des valeurs de mesure numériques de tension et de courant concernant la signature caractéristique et/ou la signature caractéristique.

8. Système de mesure (5) selon la revendication 6 ou 7, dans lequel
la signature prédéterminée est stockée dans le premier dispositif de stockage (28) et/ou dans un second dispositif de stockage (32) dans l'unité centrale (30).

9. Système de mesure (5) selon la revendication 8, dans lequel
le premier dispositif de stockage (28) et/ou le deuxième dispositif de stockage (32) est/sont adapté(s) pour, lorsque la comparaison par le dispositif de traitement (24) ne donne pas de correspondance entre la signature caractéristique et la signature prédéterminée, stocker la signature caractéristique dans le premier dispositif de stockage (28) et/ou le deuxième dispositif de stockage (32).

10. Système de mesure (5) selon l'une quelconque des revendications 6 à 9, dans lequel
le dispositif de communication (26) est conçu pour recevoir la signature prédéterminée en provenance de l'unité centrale (30) et pour envoyer la signature prédéterminée au dispositif de traitement (24).

11. Système de mesure (5) selon l'une quelconque des revendications 6 à 10, dans lequel
le dispositif de traitement (24) est conçu, lorsque la comparaison de la signature caractéristique avec la signature prédéterminée donne un écart qui est supérieur à une première valeur de seuil mais inférieur à une deuxième valeur de seuil, le dispositif de traitement (24) est conçu pour émettre un signal.

12. Système de mesure (5) selon l'une quelconque des revendications 6 à 11, comprenant en outre
un dispositif d'apprentissage automatique (29) conçu pour entraîner, sur la base d'un ensemble de données d'entraînement de résultats de comparaison entre des signatures caractéristiques et des signatures prédéterminées, la comparaison de la signature caractéristique avec la signature prédéterminée par le dispositif de traitement (24).

13. Système de mesure (5) selon l'une quelconque des revendications précédentes,
dans lequel le dispositif de communication (26) est conçu pour recevoir un algorithme librement programmable provenant de l'unité centrale (30) et pour envoyer l'algorithme au dispositif de traitement (24), et
le dispositif de traitement (24) est conçu pour appliquer l'algorithme aux valeurs de mesure numériques de tension et de courant afin de déterminer les données numériques traitées; et/ou
dans lequel le dispositif de traitement (24) est conçu pour calculer, sur la base des valeurs de mesure numériques de tension et de courant, des valeurs de puissance active, des valeurs de puissance réactive, des valeurs de puissance apparente et/ou des valeurs de déphasage, et pour envoyer ces dernières sous forme de données numériques traitées à l'unité centrale (30); et/ou
dans lequel le dispositif de traitement (24) est conçu pour comprimer les valeurs de mesure numériques de tension et de courant; et/ou
dans lequel le dispositif de communication (26) est conçu pour recevoir des données de mesure environnementale d'un capteur d'environnement (50) et pour envoyer les données de mesure environnementale au dispositif de traitement (24), et
le dispositif de traitement (24) est conçu pour déterminer les données numériques traitées sur la base des valeurs de mesure numériques de tension et de courant et des données de mesure environnementales; et/ou
le système de mesure (5) étant étalonné et/ou certifié conformément à la directive sur les instruments de mesure, MID.

14. Ensemble de mesure, comprenant
le système de mesure (5) selon l'une quelconque des revendications précédentes; et
une unité centrale (30).
